**Europäisches Patentamt**

**European Patent Office**

**Office européen des brevets**

(11) Veröffentlichungsnummer: **0 061 516**
**B1**

## EUROPÄISCHE PATENTSCHRIFT

(45) Veröffentlichungstag der Patentschrift:
**22.08.84**

(21) Anmeldenummer: **81108243.7**

(22) Anmeldetag: **12.10.81**

(51) Int. Cl.³: **G 02 B 7/26**

(54) Verfahren zur Herstellung eines Koppelelementes zum Ein- und/oder Auskoppeln von Licht.

(30) Priorität: **31.03.81 DE 3112887**

(43) Veröffentlichungstag der Anmeldung:
**06.10.82 Patentblatt 82/40**

(45) Bekanntmachung des Hinweises auf die Patenterteilung:
**22.08.84 Patentblatt 84/34**

(84) Benannte Vertragsstaaten:
**AT BE CH DE FR GB IT LI NL SE**

(56) Entgegenhaltungen:
**EP - A - 0 012 188**
**EP - A - 0 026 363**
**GB - A - 2 031 609**

(73) Patentinhaber: **SIEMENS AKTIENGESELLSCHAFT,
Berlin und München Wittelsbacherplatz 2,
D-8000 München 2 (DE)**

(72) Erfinder: **Hohenadl, Heinz, Aurbacherstrasse 1,
D-8000 München 90 (DE)**
Erfinder: **Oberbacher, Rudolf, Wolfratshauser
Strasse 286d, D-8000 München 71 (DE)**
Erfinder: **Schön, Josef, Hans-Thonauer-Strasse 35,
D-8000 München 21 (DE)**

ACTORUM AG

## Beschreibung

Die Erfindung bezieht sich auf ein Verfahren zur Herstellung eines Koppelelementes zum Ein- und/oder Auskoppeln von Licht unter Verwendung von mit ihren Achsen in einer Ebene verlaufenden Glasfasern als Lichtwellenleiter, wobei zwei Gruppen von jeweils zwei Glasfasern, die mit ihren freien Enden zueinander parallel gerichtet verlaufen und mit ihren Stirnseiten in einer Ebene liegen, mit ihren Stirnseiten unter gleichzeitigem Versatz ihrer Achsen gegenüberliegen und die Glasfasern beidseits der auf diese Weise gebildeten Koppelzone in Nutzen eines Substrates derart geführt sind, dass die im Bereich der Koppelzone ungeführt dem Substrat anliegenden Glasfaserendabschnitte innerhalb jeder Gruppe durch eine elastische Biegung der Fasern gegeneinander gedrückt werden.

Bei einem solchen, aus der DE-A Nr. 2842276 bekannten Koppelelement kommt es darauf an, dass die vier Achsen der mit ihren Stirnseiten aneinanderliegenden Glasfasern des Koppelelementes im Bereich der Koppelzone, also beidseits der Berührungsebene der Glasfasern, in einer Ebene verlaufen, um die Koppelverluste möglichst gering zu halten.

Vorliegender Erfindung liegt daher die Aufgabe zugrunde, ein Verfahren der eingangs genannten Art so auszubilden, dass diese Bedingung auf möglichst einfache Weise eingehalten werden kann.

Zur Lösung dieser Aufgabe ist erfindungsgemäss vorgesehen, dass

a) in die Oberfläche eines einstückigen plattenförmigen Substrates quer zum vorgesehenen Verlauf der Glasfasern eine streifenförmige Zone mit gegenüber der Oberfläche des Substrates abgesenktem Niveau als Glasfaser-Abstützplattform eingearbeitet wird,

b) in die Substratoberfläche Glasfaser-Führungsnuten mit etwa X-förmigem Verlauf eingearbeitet werden, mit einer nutfreien Zone im Bereich der X-Kreuzung, wobei sich die Abstützplattform symmetrisch zur X-Kreuzung erstreckt,

c) in die Führungsnuten zwei Glasfasser-Lichtwellenleiter so eingelegt werden, dass sie sich jeweils von einem X-Zweig über die Abstützplattform hinweg in einen anderen X-Zweig erstrecken, ohne sich zu überkreuzen,

d) das Substrat mit den an diesem fixierten Glasfaser-Lichtwellenleitern quer zum Verlauf der beiden Glasfaser-Lichtwellenleiter entlang einer Symmetrielinie der Anordnung in zwei Teile zerlegt wird und die beiden Teile nach einer Verschiebung der Teile gegeneinander zur Erzielung des gewünschten Achsenversatzes fixiert werden.

Da bei diesem Verfahren, bei dem die Verfahrensschritte a und b auch gegeneinander vertauscht werden können, die beiden Glasfaser-Paare, die mit ihren Stirnseiten beim fertigen Koppelelement aneinanderliegen, zunächst durch lediglich zwei Glasfasern gebildet werden, die sich über die Koppelzone hinweg erstrecken und in der Koppelzone einer gemeinsamen Abstützplattform anliegen, ist sichergestellt, dass auch nach dem Verschieben der beiden Teile des Koppelelementes gegeneinander zur Erzielung des erwünschten Achsenversatzes die Achsen der Glasfaserendabschnitte, die mit ihren Stirnseiten aneinanderliegen, in einer Ebene verlaufen. Ausserdem ermöglicht das Verfahren eine wesentliche Vereinfachung der Herstellung der Koppelelement, da jeweils nur zwei Glasfaser-Lichtwellenleiter gehandhabt werden müssen.

In weiterer Ausgestaltung der Erfindung ist vorgesehen, dass die Führungsnuten mit einer grösseren Tiefe, als die Tiefe der Abstützplattform, versehen werden, dass die Glasfasern zusammen mit einem die Glasfasern umhüllenden Silikonmantel in die Nuten eingelegt werden und dass der Silikonmantel im Bereich der Abstützplattform von den Glasfasern zuvor entfernt wird.

Auf diese Weise können die Glasfasern weitgehend in ihrem durch den Silikonmantel geschützten Zustand verwendet werden. Die Differenz der Tiefe zwischen der Abstutzplattform und den Führungsnuten gleicht dabei den Unterschied zwischen der blanken Faser und der vom Silikonmantel umhüllten Faser aus. Die Faser tritt daher ohne Knick aus dem Mantel aus und liegt der Abstützplattform an.

Im Rahmen der Erfindung kann weiter vorgesehen sein, dass im Bereich der quer zu den Glasfasern verlaufenden Symmetrielinie des Substrates ein Faden aus elastisch deformierbarem Kunststoffmaterial quer auf die der Abstützplattform anliegenden Glasfasern aufgelegt und gegen die Glasfasern gedrückt wird und dass anschliessend die Glasfasern mit einem aushärtenden Kleber am Substrat fixiert werden.

Dadurch werden die Glasfasern eines Koppelelementes vor allem in der Koppelzone definiert gegen die Abstützplattform gedrückt und damit sichergestellt, dass alle Fasern eines Koppelelementes in der Koppelzone mit ihren Achsen den gleichen Abstand von der Abstützplattform haben. Eine Verwindung der beiden Fasern wird dadurch sicher vermieden.

Als besonders vorteilhaft hat es sich dabei erwiesen, wenn auf das Substrat auf der Seite der Glasfaser-Lichtwellenleiter eine Folie, die von dem Kleber nicht benetzbar ist, aufgelegt und mit Hilfe einer Platte gegen das Substrat gedrückt wird, eine solche Folie kann z.B. aus Polytetrafluorethylen bestehen, und dass dann die verbleibenden Hohlräume zwischen Folie und Substrat mit dem Kleber ausgefüllt und die Folie nach dem Aushärten des Klebers abgezogen wird.

Schliesslich kann noch vorgesehen sein, dass in ein Substrat die Führungsnuten für mehrere Koppelelemente derart eingearbeitet werden, dass sich die Abstützplattform als zusammenhängender Streifen über alle Koppelelemente des Substrates erstreckt und dass die Zerlegung des Substrates in die beiden zur Erzielung des gewünschten Achsenversatzes gegeneinander verschiebbaren Teile und deren Verschiebung gegeneinander vor der Aufteilung des Substrates in die einzelnen Koppelelemente vorgenommen wird.

Dadurch wird die Herstellung von mehreren Koppelelementen besonders rationell gestaltet, da nun der bei mehreren Koppelelementen erforderliche gleiche definierte Versetzungsgrad der Glasfaser-Achsen in einem Arbeitsgang eingestellt werden kann.

Nachfolgend wird ein Ausführungsbeispiel der Erfindung anhand von fünf Figuren noch näher erläutert. Unter Weglassung aller nicht unbedingt zum Verständnis der Erfindung erforderlichen Einzelheiten zeigen, in mehr oder weniger grob schematischer Darstellung,

Fig. 1 eine stark vergrösserte Ansicht der Koppelzone eines Koppelelementes, von oben gesehen,

Fig. 2 und 3 zwei Ansichten eines Substrates für wenigstens ein Koppelelement mit in der Koppelzone in das Substrat eingearbeiteter Abstützplattform,

Fig. 4 ein Substrat mit zusätzlich in das Substrat eingearbeiteten Glasfaser-Führungsnuten, und

Fig. 5 das Substrat mit in die Führungsnuten eingelegten Glasfaser-Lichtwellenleitern nach der Zerlegung des Substrates in zwei Teile und nach Verschiebung dieser beiden Teile längs der Trennfuge zur Erzielung eines bestimmten Versetzungsgrades zwischen den Stirnseiten der Glasfaser-Paare des Koppelelementes.

Im einzelnen ist den Figuren zu entnehmen, dass das Koppelelement auf einem plattenförmigen Substrat 1, das z.B. aus Quarzglas besteht, aufbaut.

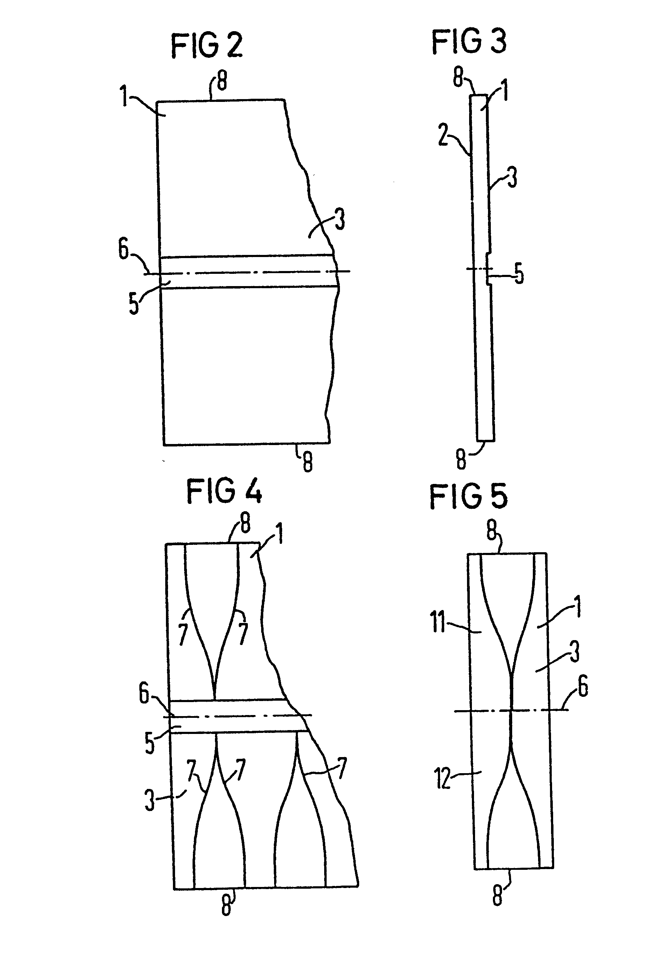

Wie die Fig. 2 und 4 zeigen, können dabei auf einem Substrat gleichzeitig mehrere Koppelelemente nebeneinander hergestellt werden.

Die beiden grossen Oberflächen 2, 3 des Substrates verlaufen dabei zueinander sehr genau parallel.

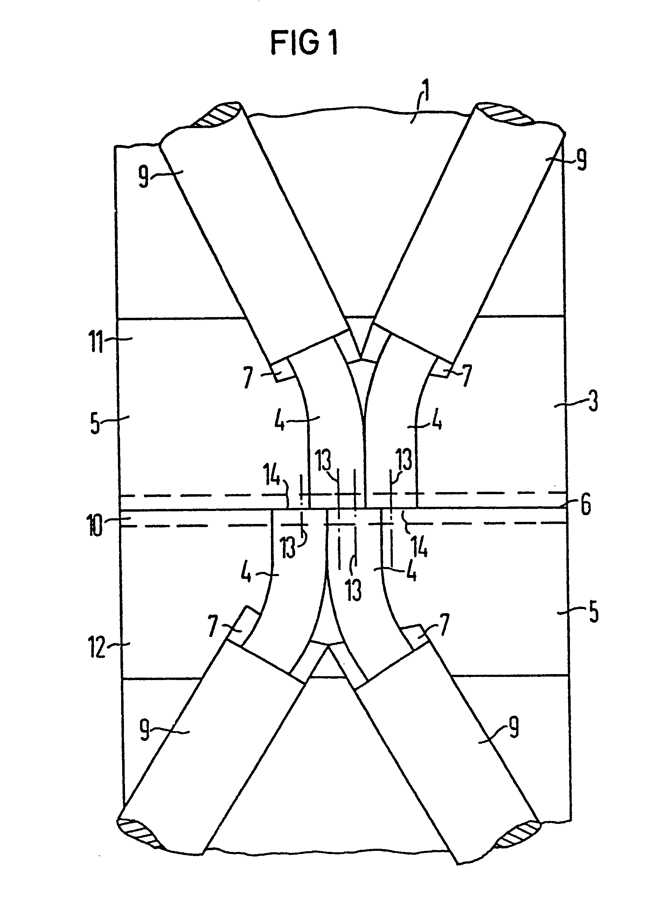

In die eine dieser Oberfläche 3 wird nun zunächst quer zum vorgesehenen Verlauf der Glasfasern 4 (Fig. 1) eine streifenförmige Zone 5 als Glasfaser-Abstützplattform mit gegenüber der Oberfläche 3 des Substrates 1 abgesenktem Niveau eingearbeitet, wobei diese Zone 5 beidseits einer Symmetrielinie 6 des Substrates verläuft.

Der nächste Fertigungsschritt besteht in dem Einarbeiten von Führungsnuten 7 in die Oberfläche 3 des Substrates.

Die Führungsnuten eines jeden Koppelelementes bilden dabei etwa die vier Äste eines X.

An den beiden von der streifenförmigen Zone 5 abgewandten Kanten 8 des Substrates 1 verlaufen dabei jeweils zwei Führungsnuten 7 zunächst parallel zueinander in Richtung zur streifenförmigen Zone 5. Anschliessend nähern sich die Führungsnuten 7 einander so weit an, dass die im Bereich der streifenförmigen Zone 5 ungeführten Glasfasern sich beim Überqueren der Symmetrielinie 6 infolge der Elastizität der Fasern gegeneinander legen und sich dabei rechtwinklig zur Symmetrielinie 6 einstellen.

Die Nuten 7 werden vorteilhaft mit Hilfe eines Stempels, der auf seiner dem Substrat zugewandten Seite ein Muster der zu erstellenden Nuten trägt und in Ultraschallschwingungen versetzt wird, in das Substrat eingearbeitet. Die Abmessungen der Nuten 7 sind dabei so gewählt, dass die Glasfasern 4 zusammen mit einem Silikonmantel 9, der sie umhüllt, in die Nuten 7 eingelegt werden können.

Im Bereich der steifenförmigen Zone 5 sind die Glasfasern 4 vom Mantel befreit und die Tiefe der streifenförmigen Zone 5 ist so bemessen, dass die aus dem Mantel 9 austretenden Glasfasern 4 ohne Knick zur Oberfläche 3 über die Zone 5 verlaufen können.

Nachdem in die Nuten 7 eines jeden Koppelelementes zwischen den Kanten 8 zwei Glasfasern in der Weise eingelegt worden sind, dass sie sich, ohne sich zu überkreuzen, mit einem abgemantelten Abschnitt über den Bereich der streifenförmigen Zone 5 erstrecken und dabei mit ihren abgemantelten Abschnitten innerhalb der streifenförmigen Zone 5 eng aneinanderliegen, wird ein aus elastisch deformierbarem Kunststoff bestehender Faden 10 (in Fig. 1 strichliert angedeutet) entlang der Symmetrielinie 6 über die Glasfasern 4 gelegt. Durch Auflegen einer in den Figuren nicht dargestellten Folie und einer Platte auf die Seite 3 des Substrates 1 werden dann die Glasfasern 4 in den Führungsnuten 7 festgehalten und die abgemantelten Abschnitte der Glasfasern im Bereich der streifenförmigen Zone 5 von der Platte mit Hilfe des Kunststofffadens definiert gegen die streifenförmige Zone 5 gedrückt. Nun wird in die verbleibenden Hohlräume zwischen der Seite 3 und der Folie, die so ausgewählt ist, dass sie von einem Kleber nicht benetzt werden kann, ein Kunstharz eingebracht, das nach dem Aushärten die Glasfasern in ihrem Verlauf an dem Substrat 1 fixiert und dabei die streifenförmige Zone 5 ausfüllt.

Nach dem Aushärten des Klebers wird die Folie abgezogen und das Substrat entlang der Symmetrielinie 6 in zwei Teile zerlegt. Dabei werden auch die Glasfasern 4 rechtwinklig zu ihrem Verlauf durchgetrennt.

Die so erhaltenen beiden Teile 11, 12 des Substrates 1 lassen sich nun entlang der Schnittebene gegeneinander verschieben. Diese Verschiebung kann so gewählt werden, dass der erwünschte Versetzungsgrad zwischen den Achsen 13 der Glasfasern 4 erhalten wird.

Auf diese Weise können z.B. Koppelelemente erhalten werden, bei denen über die Faser rechts unten in Fig. 1 ankommende Lichtsignale in die beiden oberen Fasern eingespeist werden.

Die beiden Teile 11 und 12 eines jeden Koppelelementes können nun z.B. auch durch Befestigung dieser Teile an einer weiteren Platte, die in den Figuren nicht dargestellt ist, in der erwünschten Position festgehalten werden. Dabei liegen die Stirnflächen 14 der Glasfaserenden einander an.

Wenn mit Hilfe eines Substrates zugleich mehrere Koppelelemente erstellt worden sind, so kann nun das Substrat in die einzelnen Koppelelemente zerlegt werden.

| Bezugszeichenliste | |
|---|---|
| 1 | Substrat |
| 2, 3 | Substratoberflächen |

| Bezugszeichenliste | |
|---|---|
| 4 | Glasfaser-Lichtwellenleiter |
| 5 | Abstützplattform |
| 6 | Symmetrielinie |
| 7 | Lichtwellenleiter-Führungsnuten |
| 8 | Substratkanten |
| 9 | Silikonmantel der Lichtwellenleiter |
| 10 | Kunststoffaden |
| 11, 12 | Teile des Substrates |
| 13 | Glasfaserachsen |
| 14 | Stirnflächen der Glasfasern |

**Patentansprüche**

1. Verfahren zur Herstellung eines Koppelelementes zum Ein- und/oder Auskoppeln von Licht unter Verwendung von mit ihren Achsen in einer Ebene verlaufenden Glasfasern als Lichtwellenleiter, wobei zwei Gruppen von jeweils zwei Glasfasern, die mit ihren freien Enden zueinander parallel gerichtet verlaufen und mit ihren Stirnseiten in einer Ebene liegen, mit ihren Stirnseiten unter gleichzeitigem Versatz ihrer Achsen gegenüberliegen und die Glasfasern beidseits der auf diese Weise gebildeten Koppelzone in Nuten eines Substrates derart geführt sind, dass die im Bereich der Koppelzone ungeführt dem Substrat anliegenden Glasfaserendabschnitte innerhalb jeder Gruppe durch eine elastische Biegung der Fasern gegeneinander gedrückt werden, gekennzeichnet durch folgende Verfahrensschritte:

a) in die Oberfläche (3) eines einstückigen plattenförmigen Substrates (1) wird quer zum vorgesehenen Verlauf der Glasfasern (4) eine streifenförmige Zone (5) mit gegenüber der Oberfläche (3) des Substrates (1) abgesenktem Niveau als Glasfaser-Abstützplattform eingearbeitet,

b) in die Substratoberfläche (3) werden Glasfaser-Führungsnuten (7) mit etwa X-förmigem Verlauf eingearbeitet, mit einer nutfreien Zone im Bereich der X-Kreuzung, wobei sich die Abstützplattform symmetrisch zur X-Kreuzung erstreckt,

b) in die Führungsnuten (7) werden zwei Glasfaser-Lichtwellenleiter (4) so eingelegt, dass sie sich jeweils von einem X-Zweig über die Abstützplattform hinweg in einen anderen X-Zweig erstrecken, ohne sich zu überkreuzen,

d) das Substrat (1) mit den an diesem fixierten Glasfaser-Lichtwellenleiter (4) entlang einer Symmetrielinie (6) der Anordnung in zwei Teile (11, 12) zerlegt und die beiden Teile (11, 12) werden nach einer Verschiebung der Teile gegeneinander zur Erzielung des gewünschten Achsenversatzes fixiert.

2. Verfahren nach Anspruch 1, dadurch gekennzeichnet, dass die Führungsnuten (7) mit einer grösseren Tiefe als die Tiefe der Abstützplattform versehen werden, dass die Glasfasern (4) zusammen mit einem die Glasfasern umhüllenden Silikonmantel (9) in die Nuten (7) eingelegt werden und dass der Silikonmantel (9) im Bereich der Abstützplattform (5) von den Glasfasern zuvor entfernt wird.

3. Verfahren nach einem der Ansprüche 1 oder 2, dadurch gekennzeichnet, dass im Bereich der quer zu den Glasfasern verlaufenden Symmetrielinie (6) des Substrates (1) ein Faden (10) aus elastisch deformierbarem Kunststoffmaterial quer auf die der Abstützplattform (5) anliegenden Glasfasern (4) aufgelegt und gegen die Glasfasern (4) gedrückt wird und dass anschliessend die Glasfasern (4) mit einem aushärtenden Kleber am Substrat (1) fixiert werden.

4. Verfahren nach Anspruch 3, dadurch gekennzeichnet, dass auf das Substrat (1) eine Folie, die von dem Kleber nicht benetzbar ist, aufgelegt und mit Hilfe einer Platte gegen das Substrat gedrückt wird, die Folie besteht z.B. aus Polytetrafluoräthylen, dass dann die verbleibenden Hohlräume zwischen Folie und Substrat mit dem Kleber ausgefüllt und die Folie nach dem Aushärten des Klebers abgezogen wird.

5. Verfahren nach einem der vorhergehenden Ansprüche, dadurch gekennzeichnet, dass in ein Substrat (1) die Führungsnuten (7) für mehrere Koppelelemente derart eingearbeitet werden, dass sich die Abstützplattform (5) als zusammenhängender Streifen über alle Koppelelemente des Substrates (1) erstreckt und dass die Zerlegung des Substrates (1) in die beiden zur Erzielung des gewünschten Achsenversatzes gegeneinander verschiebbaren Teile (11, 12) und deren Verschiebung gegeneinander vor der Aufteilung des Substrates (1) in die einzelnen Koppelelemente vorgenommen wird.

**Claims**

1. A method of manufacturing a coupling element for on- and/or off-light coupling using glass fibres, the axes of which run in a plane, as light waveguides, in which two groups of in each case two glass fibres which run with their free ends parallel to one another and their end faces lying in a plane, have their end faces arranged opposite one another while at the same time their axes are offset, and on both sides of the coupling zone so formed, the glass fibres are guided in grooves in a substrate in such a way that the glass fibre end sections, which rest against the substrate in an unguided manner in the region of the coupling zone, are pressed against one another by an elastic bending of the fibres within each group, characterised by the following method steps—

(a) in the surface (3) of an integral plate-shaped substrate (1), a strip-shaped zone (5) having a level which is lowered compared with the surface (3) of the substrate (1), is formed transversely to the intended course of the glass fibres (4) as a glass fibre supporting platform,

(b) glass fibre quide grooves (7) are formed in the substrate surface (3) having an approximately X-shaped pattern, with a zone in the region of the crossing of the X, the supporting platform extending symmetrically to the crossing of the X,

(c) two glass fibre light waveguides (4) are so inserted into the guide grooves (7) that they respectively extend from a branch of the X across the supporting platform into another branch of the X without intersecting one another,

(d) the substrate (1) having the glass fibre light waveguides (4) fixed thereon is divided into two parts (11, 12) tansversely to the course of the two light waveguides (4) along a line of symmetry (6) of the arrangement, and the two parts (11, 12) after displacement thereof relative to one another, are fixed in order to achieve the required axial offset.

2. A method according to Claim 1, characterised in that the guide grooves (7) have a greater depth than the depth of the supporting platform; that the glass fibres (4), together with a silicon sheath (9) encasing the glass fibres, are inserted into the grooves (7); and that in the region of the supporting platform (5) the silicon sheath (9) has previously been removed from the glass fibres.

3. A method according to one of Claims 1 or 2, characterised in that in the region of the line of symmetry (6) of the substrate (1), which extends transversely to the glass fibres, a thread (10) made of elastically deformable synthetic resin material is placed transversely onto the glass fibres (4) which rest against the supporting platform (5), and is pressed against the glass fibres (4); and that the glass fibres (4) are subsequently fixed to the substrate (1) by means of a hardenable adhesive.

4. A method according to Claim 3, characterised in that a film, which is not wettable by the adhesive, is placed on the substrate (1) and is pressed against the substrate with the aid of a plate, the film consisting, for example, of polytetrafluoroethylene; and that the remaining empty spaces between the film and substrate are then filled with the adhesive and after the hardening of the adhesive, the film is removed.

5. A method according to one of the preceding claims, characterised in that the guide grooves (7) for a plurality of coupling elements are worked into a substrate (1) in such a way that the supporting platform (5) extends as a continuous strip over all coupling elements of the substrate (1); and that the division of the substrate (1) into the two parts (11, 12) which can be mutually displaced in order to achieve the required axial offset, and their displacement relative to one another are carried out before the division of the substrate (1) into the individual coupling elements.

## Revendications

1. Procédé pour fabriquer un élément de couplage pour injecter par couplage et/ou extraire par découplage une lumière, moyennant l'utilisation de fibres optiques servant de guides d'ondes lumineuses et dont les axes sont disposés dans un plan, et dans lequel deux groupes formés chacun de deux fibres de verre, dont les extrémités libres s'étendent en étant dirigées parallèlement entre elles et dont les faces frontales sont situées dans un plan, sont disposés en vis-à-vis par leurs faces frontales, alors que leurs axes sont simultanément décalés, et dans lequel les fibres de verre sont guidées des deux côtés de la zone de couplage ainsi formées dans des rainures d'un substrat de telle sorte que les sections d'extrémité des fibres de verre, qui reposent sur le substrat sans être guidées dans la région de la zone de couplage, à l'intérieur de chaque groupe, sont pressées les unes contre les autres par une flexion élastique des fibres, caractérisé par les phases opératoires suivantes:

a) dans la surface (3) d'un substrat d'un seul tenant en forme de plaque (1), on usine une zone en forme de bande (5) possédant un niveau surbaissé par rapport à la surface (3) du substrat (1) en tant que plate-forme de soutien des fibres de verre,

b) dans la surface (3) du substrat, on usine des rainures (7) de guidage des fibres de verre possédant une allure approximativement en forme de X, avec une zone exempte de rainures, dans la région du croisement en X, la plate-forme de soutien 1 s'étendant symétriquement par rapport au croisement en X,

c) dans les rainures de guidage (7), on dispose deux guides d'ondes lumineuses formés de fibres de verre (4) de telle sorte qu'ils s'étendent depuis une branche en X au-delà de la plate-forme de soutien pour former une autre branche en X, sans s'intersecter,

d) on subdivise le substrat (1) et les guides d'ondes lumineuses en forme de fibres de verre (4) fixées sur ce substrat, transversalement par rapport à l'extension des deux guides d'ondes lumineuses (4) le long d'un axe de symétrie (6) du dispositif, sous la forme de deux pièces (11, 12), et on fixe ces deux pièces (11, 12), après les avoir décalées l'une par rapport à l'autre, de manière à obtenir le décalage désiré de leurs axes.

2. Procédé suivant la revendication 1, caractérisé par le fait qu'on aménage les rainures de guidage (7) à une profondeur plus importante que celle de la plate-forme de soutien, qu'on insère les fibres de verre (4), ainsi qu'une enveloppe en silicone (11) enveloppant les fibres de verre, dans les rainures (7), et qu'on retire préalablement l'enveloppe en silicone (9) des fibres de verre, dans la région de la plate-forme de soutien (5).

3. Procédé suivant l'une des revendications 1 ou 2, caractérisé par le fait que dans la région de l'axe de symétrie (6) du subtrat (1), qui s'étend transversalement par rapport aux fibres de verre, on appose une bande (10) constituée en une matière plastique élastiquement déformable, transversalement sur les fibres de verre (4) appliquées sur la plate-forme de soutien (5) et qu'on la presse contre ces dernières et qu'on fixe ensuite les fibres de verre (14) avec une colle durcissable sur le substrat (1).

4. Procédé suivant la revendication 3, caractérisé par le fait qu'on appose sur le substrat (1) une feuille qui ne peut pas être mouillée par la colle et qu'on la presse contre le substrat à l'aide d'une plaque, ladite feuille étant constituée par exemple par du polytétrafluoroéthylène, et qu'on remplit ensuite avec la colle les interstices subsistant entre la feuille et le substrat et qu'on retire la feuille une fois la colle durcie.

5. Procédé suivant l'une des revendications précédentes, caractérisé par le fait que l'on usine dans un substrat (1) les rainures de guidage (7) pour plusieurs éléments de couplage de telle manière que la plate-forme de soutien (5) s'étende sous la forme de bandes continues sur tous les éléments de couplage du substrat (1), qu'on effectue la subdivision du substrat (1) sous la forme des deux parties (11, 12) déplaçables l'une par rapport à l'autre en vue d'obtenir le décalage désiré de leurs axes, et qu'on les décale l'une par rapport à l'autre avant la subdivision du substrat (1) servant à former les différents éléments de couplage.

# FIG 1

FIG 2

FIG 3

FIG 4

FIG 5